Europäisches Patentamt

European Patent Office

Office européen des brevets

(19)

(11) Publication number: **0 028 054**
**B1**

(12)      EUROPEAN PATENT SPECIFICATION

(45) Date of publication of patent specification: **16.05.84**    (51) Int. Cl.³: **G 21 C 19/06**

(21) Application number: **80302393.6**

(22) Date of filing: **16.07.80**

(54) Rack, in particular for the storage of nuclear fuel assemblies.

(30) Priority: **24.10.79 US 88205**

(43) Date of publication of application:
**06.05.81 Bulletin 81/18**

(45) Publication of the grant of the patent:
**16.05.84 Bulletin 84/20**

(84) Designated Contracting States:
**CH DE FR GB IT LI**

(56) References cited:
**EP-A-0 023 742**
**DE-A-2 836 762**
**US-A-4 044 267**

(73) Proprietor: **THE BABCOCK & WILCOX
COMPANY**
**1010 Common Street P.O. Box 60035**
**New Orleans Louisiana 70160 (US)**

(72) Inventor: **Larson, Gordon Clemence**
**Route 1 Box 181**
**Evington Virginia 24550 (US)**
Inventor: **Coe, Richard Allan**
**401 Hickok Road**
**Lynchburg Virginia 24502 (US)**

(74) Representative: **Cotter, Ivan John et al**
**D. YOUNG & CO. 10 Staple Inn**
**London WC1V 7RD (GB)**

Courier Press, Leamington Spa, England.

## Description

The present invention relates to racks. More particularly, but not exclusively, the invention relates to a rack for the storage of nuclear fuel assemblies.

Fuel for commercial nuclear fission reactors typically includes a stack of enriched uranium dioxide pellets contained within a tube called a fuel rod. A fuel assembly includes about 200 to 300 fuel rods held in a square array by spacer grids and upper and lower end fittings.

It is common for nuclear fuel assemblies, when not in use in the reactor steam cycle, to be stored in pools of water at the nuclear reactor site or at another site. Fuel assemblies are stored both before and after they are used to produce energy in the reactor.

Typically, nuclear fuel assemblies are stored under water at reactor sites in some sort of rack structure, spaced from each other a sufficient distance to preclude a sustained nuclear fission chain reaction. One type of rack uses a pair of horizontal frames supporting the fuel assembly at the top and bottom in a vertical attitude. In another the fuel assemblies are inserted into cans. The top and bottom ends of the cans are supported by some form of horizontal frame. These types of structures have significant flexibility, which is a disadvantage in that it permits them to respond to seismic or other excitations, giving rise to the possibility of damage to the stored fuel assemblies and potential leakage of radioactive materials therefrom.

The lack of nuclear fuel reprocessing facilities has forced many utilities and fuel assembly manufacturers to increase the number of fuel assemblies stored in their storage pools. The most common way to increase the capacity of a storage pool is to use a more closely spaced fuel assembly array. A sustained nuclear fission chain reaction is precluded in the closely spaced array by positioning a neutron absorbing material between the stored fuel assemblies. Current closely spaced fuel assembly rack designs require expensive fabrication techniques and inefficient use of structural material.

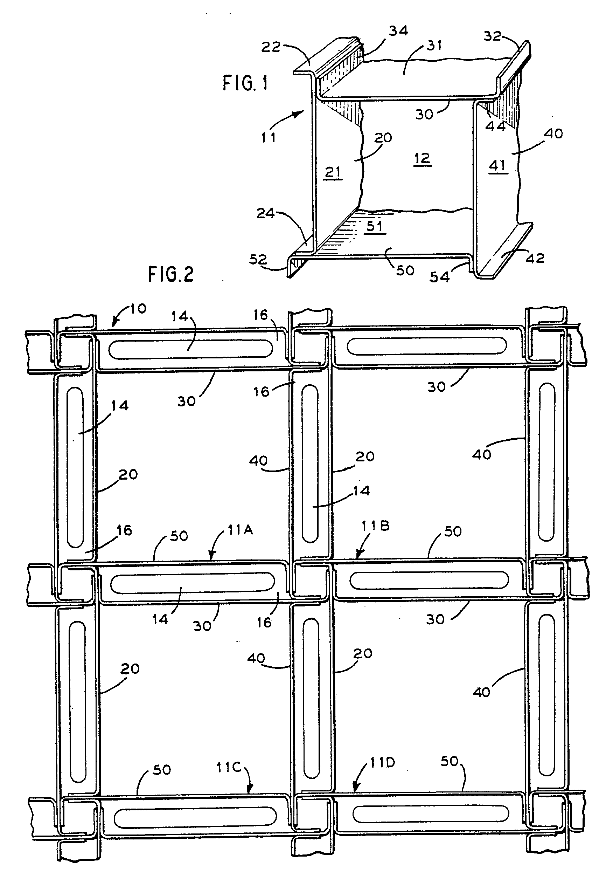

US—A—4 044 267 (Fig. 1) discloses a rack comprising a plurality of compartments for nuclear fuel assemblies that are defined by interattached plates and are arranged in a square array with cavities of smaller cross-sectional area than the compartments arranged between some of the compartments. A variety of different parts are employed to define the compartments making the structure fairly complex.

There is posed the problem of finding a rack that can be easily fabricated. These objects are realized by the present invention providing a rack comprising a plurality of compartments that are defined by interattached plates and are arranged in a square array with cavities of smaller cross-sectional area than the compartments arranged between the compartments, characterised in that the rack comprises a plurality of cells each comprising four plates of flattened U-shaped cross-section interattached to one another to form a compartment, and in that the cells are interattached in a square array to form a plurality of the cavities, there being one cavity between each adjacent pair of the cells and each of the cavities being of smaller cross-sectional area than each of the compartments.

A preferred embodiment of the present invention described hereinbelow comprises a nuclear fuel assembly storage rack including four identical plates joined to form a nuclear fuel assembly storage cell. A number of these storage cells can be joined in an array to form a modular rack structure of variable array size depending on the individual plant application and needs. The storage cell is made of stainless steel plates which can be assembled on a mandrel to achieve required dimensional control and square corners on the inside of the cell. The plates can be joined together by rivetting or welding easily accessible flange areas or tabs thereof. Since the plates are identical, the advantages of part stardardisation are present. Material procurement, tooling, and fabrication can thus all be simplified. The shape of the plates and the arrangement of the cells create a cavity between adjacent cell walls into which neutron absorbing material can easily be placed. The cells can be joined together to form a stiff array to permit the natural frequency of the structure to be made sufficiently high to avoid large seismic response. Seismic loads that are generated can be carried from cell to cell, rather than through an external framework, thereby reducing the amount of structural steel needed. The rack structure can be designed to be free standing; i.e. no braces are needed between the rack and the pool walls, thus eliminating structure steel bracing.

The fact that the preferred rack utilises a single, standardised structural part can result in lower unit fabrication and reduced tooling costs. The fact that the preferred rack is simple to fabricate can reduce welds or rivetting, simplifying dimensional controls and reducing inspections.

Since the preferred rack is modular in construction, it may be easily adjusted to any storage pool configuration or plant arrangement.

The invention will now be further described, by way of illustrative and non-limiting example, with reference to the accompanying drawings, in which:

Figure 1 is a perspective view of an end of a nuclear fuel assembly storage cell of a nuclear fuel assembly storage rack constituting a preferred embodiment of the invention; and

Figure 2 is a partial plan view of the nuclear fuel assembly storage rack.

Refer now to Figure 1, wherein an end of an elemental nuclear fuel assembly cell 11 is shown. The cell 11 is constructed from four identical stainless steel plates 20, 30, 40 and 50. Each of plates 20, 30, 40 and 50 has an elongate rectangular wall 21, 31, 41, and 51 respectively, and has a left tab 22, 32, 42 and 52 and a right tab 24, 34, 44 and 54 respectively extending perpendicularly therefrom towards the rear thereof. The rear of each plate is defined as the opposite side to that facing the centre of the cell 11.

The plates 20, 30, 40 and 50 are interattached as shown in Figure 1 to form the elemental cell 11, which has a storage compartment 12 for storing a nuclear fuel assembly (not shown). Note that the front of each plate 20, 30, 40 and 50 faces the interior or centre of the cell 11. To assemble the cell 11, the plate 30 is positioned longitudinally parallel to and transversely rotated ninety degrees clockwise with respect to the plate 20. The right tab 34 is attached by rivetting or spot welding or some other suitable means to the front surface of the wall 21 at the left side of the wall 21.

The plate 40 is positioned longitudinally parallel to and rotated transversely ninety degrees clockwise with respect to the plate 30. The right tab 44 is attached by rivetting or spot welding or other suitable means to the front surface of the wall 31 and at the left side of the wall 31.

The plate 50 is positioned longitudinally parallel to and rotated transversely ninety degrees clockwise with respect to the plate 40. The right tab 54 is attached by rivetting or spot welding or other suitable means to the front surface of the wall 41 at the left side of the wall 41.

The right tab 24 is attached by rivetting or spot welding or other suitable means to the front surface of the wall 51 at the left side of the wall 51.

The plates 20, 30, 40 and 50 may be assembled on a mandrel (not shown) to achieve required dimensional control and square corners on the inside of the cell 11.

Refer now to Figure 2, which shows a nuclear fuel assembly storage rack 10 comprising an array of identical cells 11a, 11b, 11c, and 11d, and portions of other cells not numbered but also being identical therewith. The cells are arranged longitudinally parallel to each other and in a square array as shown in Figure 2.

The left tab 52 of the cell 11b is attached to the rear surface and at the left side of the plate 41 of the cell 11a. The left tab 32 of the cell 11a is attached to the rear surface of and at the left side of the plate 21 of the cell 11b. By joining the plates 20, 30, 40 and 50 as above described to form cells 11 and by joining adjacent cells 11a and 11b as described, a cavity 16 is formed between the plate 40 of the cell 11a and the plate 20 of the cell 11b. Neutron absorbing material 14, typically a boron compound, may be placed in the cavity 16 thereby positioning it between nuclear fuel assemblies (not shown) stored in the cells 11a and 11b to absorb neutrons and to preclude the occurrence of a sustained nuclear fission reaction.

It will be readily apparent from the above description and the drawings how the cells 11c and 11d are similarly attached to each other and to the cells 11a and 11b and moreover how a storage rack 10 of any number of cells 11 may be constructed in any size or shape array.

Upon assembly of the rack 10, a cavity 16 will be present between each pair of cells 11. Note that the size of the compartment 12 and cavity 16 depend upon the dimensions of the identical plates 20, 30, 40 and 50, and the walls and tabs thereof.

Appropriate lead-in guide structure (not shown) is provided to preclude spacer grid hangup during loading of the fuel assemblies into the rack. Additionally, appropriate fittings (not shown) are provided for bearing the weight of the fuel assemblies and to keep them off the storage pool floor. These features are within the capabilities of one ordinarily skilled in the art and are therefore excluded from this detailed description.

Note that in the above description of the preferred embodiment stainless steel is used as the plate material. However, the invention is not limited thereto and any other adequate material may be used.

## Claims

1. A rack comprising a plurality of compartments (12) that are defined by interattached plates (20, 30, 40, 50) and are arranged in a square array with cavities (16) of smaller cross-sectional area than the compartments (12) arranged between the compartments (12), characterised in that the rack comprises a plurality of cells (11A, 11B, 11C, 11D) each comprising four plates (20, 30, 40, 50) of flattened U-shaped cross-section interattached to one another to form a compartment (12), and in that the cells (11A, 11B, 11C, 11D) are interattached in a square array to form a plurality of the cavities (16), there being one cavity (16) between each adjacent pair of the cells (11A to 11D) and each of the cavities (16) being of smaller cross-sectional area than each of the compartments (12).

2. A rack according to claim 1, wherein each of said plurality of plates (e.g. 20) includes a wall (e.g. 21) and a plurality of tabs (e.g. 22, 24) attached to said wall and extending away from the plane of said wall.

3. A rack according to claim 2, wherein each of said plates (e.g. 20) includes two of said tabs (e.g. 22, 24) attached to and extending along the length of the longitudinal edges of said wall (e.g. 21).

4. A rack according to claim 3, wherein said wall (e.g. 21) of each of said plurality of plates (e.g. 20) is flat and rectangular and has a front side facing the centre of said cell, a rear side, a left side and a right side, the wall (e.g. 21) corresponds to the base of the flattened U-shaped cross-section, and the two tabs comprise an elongate left tab (e.g. 22) and an elongate right tab (e.g. 24).

5. A rack according to claim 4, wherein the right tab (e.g. 24) of each of the four plates of each of the cells is attached to the plate (e.g. 50) to the right thereof at the left side of the front surface of the wall of the base of said plate (50) to the right thereof, to form, from the walls of said four plates (20, 30, 40, 50), the compartment (12), the compartment being a right square prismatic compartment open at both ends.

6. A rack according to claim 5, wherein each of the plurality of cells (11A, 11B, 11C, 11D) is capable of accepting a nuclear fuel assembly in the compartment (12) thereof and the cavities (16) are capable of accepting a neutron absorbing material in sufficient quantity to preclude a sustained nuclear fission chain reaction in the rack.

7. A rack according to claim 6, wherein at least one of the compartments (12) has a nuclear fuel assembly therein and a sufficient quantity of neutron absorbing material (14) to preclude a sustained nuclear fission chain reaction is disposed within the cavities (16).

## Patentansprüche

1. Lagergestell mit mehreren Kammern, welche durch gegenseitig angebrachte Platten (20, 30, 40, 50) gebildet und in einer quadratischen Gruppierung angeordnet sind mit zwischen den Kammern (12) angeordneten Hohlräumen (16) kleinerer Querschnittsfläche als die Kammern (12), dadurch gekennzeichnet, daß das Lagergestell mehrere Fächer (11A, 11B, 11C, 11D) aufweist, deren jedes vier Platten (20, 30, 40, 50) von abgeflachtem U-förmigen Querschnitt aufweist, die aneinander gegenseitig angebracht sind, um eine Kammer (12) zu bilden, und daß die Fächer (11A, 11B, 11C, 11D) gegenseitig in einer quadratischen Gruppierung angebracht sind, um mehrere der Hohlräume (16) zu bilden, wobei es einen Hohlraum (16) zwischen jedem benachbarten Paar von Fächern (11A bis 11D) gibt und jeder der Hohlräume (16) eine kleinere Querschnittsfläche als jede der Kammern (12) hat.

2. Lagergestell nach Anspruch 1, wobei jede der Vielzahl von Platten (z. B. 20) eine Wand (z. B. 21) und mehrere Laschen (z. B. 22, 24) aufweist, die an der Wand angebracht sind und sich aus der Ebene der Wand fort erstrecken.

3. Lagergestell nach Anspruch 2, wobei jede der Platten (z. B. 20) zwei der Laschen (z. B. 22, 24) aufweist, die an der Wand (z. B. 21) angebracht sind und sich längs der Längskanten derselben erstrecken.

4. Lagergestell nach Anspruch 3, wobei die Wand (z. B. 21) jeder der Vielzahl von Platten (z. B. 20) flach und rechteckig ist und eine Vorderseite, welche dem Zentrum des Faches zugerichtet ist, eine Rückseite, eine linke Seite und eine rechte Seite hat, wobei die Wand (z. B. 21) der Basis des Querschnittes der Form eines abgeflachten U entspricht und die zwei Laschen eine längliche linke Lasche (z. B. 22) und eine längliche rechte Lasche (z. B. 24) aufweisen.

5. Lagergestell nach Anspruch 4, wobei die rechte Lasche (z. B. 24) jeder der vier Platten jedes der Fächer an der Platte (z. B. 50) an seiner rechten Seite an der linken Seite der Vorderfläche der Wand der Basis der Platte (50) rechts von ihr angebracht ist, um aus den Wänden der vier Platten (20, 30, 40, 50) die Kammer (12) zu bilden, die eine an beiden Enden offene, prismatische, quadratische Kammer mit rechten Winkeln ist.

6. Lagergestell nach Anspruch 5, wobei jedes der Vielzahl von Fächern (11A, 11B, 11C, 11D) geeignet derart ausgestaltet ist, daß es einen Kernbrennelementsatz in der Kammer (12) desselben aufnimmt, und die Hohlräume (16) geeignet derart ausgestaltet sind, daß sie ein Neutronen absorbierendes Material in ausreichender Menge aufnehmen, um eine andauernde Kernspaltungskettenreacktion in dem Lagergestell auszuschließen.

7. Lagergestell nach Anspruch 6, wobei in mindestels einer der Kammern (12) ein Kernbrennelementsatz angeordnet ist und eine ausreichende Menge von Neutronen absorbierendem Material (14) in den Hohlräumen (16) angeordnet ist, um eine andauernde Kernspaltungskettenreaktion auszuschließen.

## Revendications

1. Râtelier comprenant une pluralité de compartiment (12) qui sont définis par des plaques fixées les unes aux autres (20, 30, 40, 50) et sont disposés en formation en carrés avec interposition entre les compartiments (12) de cavités (16) à plus faible aire de section que les compartiments (12), caractérisé en ce qu'il comprend une pluralité d'alvéoles (11A, 11B, 11C, 11D) constitués chacun par quatre plaques (20, 30, 40, 50) à section en U aplati fixées les unes aux autres pour former un compartiment (12), et en ce que les alvéoles (11A, 11B, 11C, 11D) sont fixés les uns aux autres en formation en carrés pour former une pluralité desdites cavités (16), une cavité (16) étant prévue entre chaque paire d'alvéoles adjacents (11A à 11D) et chacune des cavités (16) étant à plus faible aire de section que chacun des compartiments (12).

2. Râtelier selon la revendication 1, caractérisé en ce que chacune de ladite pluralité de plaques (par exemple 20) comporte une paroi (par exemple 21) et une pluralité de pattes (par exemple 22, 24) fixées à ladite paroi et qui s'écartent du plan de ladite paroi.

3. Râtelier selon la revendication 2, caractérisé en ce que chacune desdites plaques (par exemple 20) comporte deux desdites pattes (par exemple 22, 24) fixées aux bords longitudinaux de ladite paroi (par exemple 21) et longeant ces bords.

4. Râtelier selon la revendication 3, caractérisé en ce que ladite paroi (par exemple 21) de chacune de ladite pluralité de plaques (par exemple 20) est plate et rectangulaire et a un côté avant regardant vers le centre dudit alvéole, un côté arrière, un côté gauche et un côté droit, la paroi (par exemple 21) correspond à la base de la section en U aplati, et les deux pattes constituent une patte gauche oblongue (par exemple 22) et une patte droite oblongue (par exemple 24).

5. Râtelier selon la revendication 4, caractérisé en ce que la patte droite (par exemple 24) de chacune des quatre plaques de chacun des alvéoles est fixée à la plaque (par exemple 50) située à sa droite du côté gauche de la surface avant de la paroi de la base de ladite plaque (50) située à sa droite, pour former, à partir des quatre susdites plaques (20, 30, 40, 50), le compartiment (12), le compartiment étant un compartiment en prisme carré droit ouvert aux deux extrémités.

6. Râtelier selon la revendication 5, caractérisé en ce que chacun de la pluralité d'alvéoles (11A, 11B, 11C, 11D) est capable de recevoir un ensemble de combustible nucléaire dans son compartiment (12) et les cavités (16) sont capables de recevoir un absorbant de neutrons en quantité suffisante pour éviter une réaction en chaîne de fission nucléaire entretenue dans le râtelier.

7. Râtelier selon la revendication 6, caractérisé en ce qu'un au moins des compartiments (12) contient un ensemble de combustible nucléaire et une quantité d'absorbant de neutrons (14) suffisante pour empêcher une réaction en chaîne de fission nucléaire entretenue est disposée dans les cavités (16).

0 028 054

FIG. 1

FIG. 2